# EUROPÄISCHE PATENTANMELDUNG

(11) **EP 0 723 905 A1**
(43) Veröffentlichungstag der Anmeldung: **31.07.1996**
(21) Anmeldenummer: 96100092.4
(22) Anmeldetag: 05.01.1996
(51) Int. Cl.: B62D 55/06, F41H 7/02

(54) **Gleiskettenfahrzeug**

(30) Priorität: 24.01.1995 DE 19502036
(71) Anmelder: Krauss-Maffei Aktiengesellschaft, D-80997 München (DE)
(72) Erfinder: Schlegl, Eugen, D-82194 Gröbenzell (DE); Zöltsch, Ludwig, D-81245 München (DE); Zurek, Rudolf, Dr., D-82194 Gröbenzell (DE)

(57) **Zusammenfassung**

Um ein Gleiskettenfahrzeug möglichst schnell und kostensparend an unterschiedliche Einsatzanforderungen anpassen zu können, wird vorgeschlagen, den Wannenaufbau modular zu gestalten, bestehend aus mindestens zwei Modulen 2,3. Mindestens ein Modul ist dabei mit den beiden Laufwerkseinheiten 1a und 1b gekoppelt und die beiden Laufwerkseinheiten 1a und 1b sind über Zugstäbe 8 miteinander verbunden. Durch geringes Gewicht und Volumen des teilaufgebauten Fahrzeugs ist eine gute Luftverlastbarkeit, z.B. durch Hubschrauber, gegeben.

## Beschreibung

Die Erfindung bezieht sich auf ein Gleiskettenfahrzeug, bestehend aus zwei Laufwerkseinheiten und einer Wanne in modularer Zusammensetzung.

Nach DE 37 25 920 A1 ist ein Fahrgestell für ein Gleiskettenfahrzeug bekannt, wobei das Fahrzeuggehäuse und die Kräfte und Schwingungen einleitenden und/oder Kräften und Schwingungen unterworfenen Elemente durch dauerelastisches Material großflächig miteinander verbunden sind.

Nach EPA 0 479 016 A2 ist ferner ein Gleiskettenfahrzeug der eingangs genannten Art bekannt. Um die Wirkung der vom Gleiskettenfahrzeug auf die Fahrzeugwanne übertragenen Kräfte weitgehend zu eliminieren und um günstigere Dämpfungseigenschaften zu erzielen, werden dabei die einander gegenüberliegenden Laufwerksträger durch Zug- und/oder Druckstreben miteinander verbunden. Dadurch wird eine weitgehende Aufhebung der an der Befestigungsstelle zwischen Gleiskettenlaufwerk und Fahrzeugwanne wirkenden Kräfte erreicht.

Derartige bekannte Gleiskettenfahrzeuge eignen sich zwar für eine Leichtbauweise durch die Verwendung von Leichtbauwerkstoffen und es können auch einzelne Fahrzeugelemente wie z.B. das Laufwerk zu Modulen zusammengefaßt und als solche montiert bzw. demontiert werden. Eine Änderung des Rüstsatzes ist dagegen sehr aufwendig, da hierzu die gesamte Wanne neu ausgestattet werden muß bzw. ein völliger Neubau erforderlich ist. Auch sind die Einheiten z.B. für die Luftverlastbarkeit noch zu schwer und/oder zu voluminös.

Der Erfindung liegt daher die Aufgabe zugrunde, ein Gleiskettenfahrzeug der eingangs genannten Art möglichst schnell und wenig kostenaufwendig an unterschiedliche Einsatzanforderungen anpassen zu können, bei möglichst geringem Gewicht und Volumen des teilaufgebauten Fahrzeugs, insbesondere für die Luftverlastbarkeit.

Diese Aufgabe wird gemäß den Merkmalen des Patentanspruchs 1 gelöst.

Aufgrund des modularen Aufbaus gemäß der Erfindung können nicht nur die Laufwerksmodule sondern insbesondere auch das Triebwerksmodul, im wesentlichen bestehend aus Triebwerk und Wannengehäuse für den Triebwerksbereich und das Rüstsatz- oder Kampfraummodul, im wesentlichen bestehend aus dem Wannengehäuse für diesen Bereich, dem Rüstsatz, der Bewaffung und gegebenenfalls des Fahrerstandes, ohne weiteres ausgewechselt werden. Durch Zusammensetzen der entsprechenden Module kann somit aus einem Front- ein Hecktriebler und aus einem Heck- ein Fronttriebler gemacht werden.

In vorteilhafter Ausbildung der Erfindung sind z.B. folgende Varianten denkbar:
1. Antriebsanlage, Laufwerk und Rüstsatzeinheit sind eigenständige Module und können beliebig zusammengesetzt werden.
1.1 Antriebsanlage und Laufwerk
   Antriebsanlage und Laufwerk bilden eine U-förmige Antriebseinheit und die Rüstsatzeinheit wird über schnell lösbare Aufnahmen aus- bzw. eingesetzt.
   Die Antriebseinheit ist allein fahrfähig. Die Antriebseinheit oder die Rüstsatzeinheit können Vorrichtungen zur selbständigen Aufnahme des jeweils anderen Moduls haben.
   Sie kann zu einer an einer beliebigen Stelle stehenden Rüstsatzeinheit fahren, diese aufnehmen, woanders absetzen und eine andere wieder aufnehmen.
1.2. Antriebsanlage und Rüstsatzeinheit
   Diese Kombination kann eine oder mehrere Rüstsatzeinheiten voll mit Energie versorgen.
1.3 Laufwerk und Rüstsatzeinheit
   Diese Kombination ist durch Anhängen an ein anderes Fahrzeug, z.B. komplettes Fahrzeug (Antriebsmodul plus Laufwerksmodul plus Rüstsatzmodul), transportierbar.

Weitere vorteilhafte Ausbildungen der Erfindung ergeben sich aus den Unteransprüchen.

In der Zeichnung ist ein Ausführungsbeispiel der Erfindung dargestellt. Es zeigen:
- Fig. 1: ein Gleiskettenfahrzeug mit Laufwerk und aufgesetztem Triebwerksmodul sowie abgehobenem Rüstsatz- oder Kampfraum-Modul in drei Ansichten,
- Fig. 2: ein Gleiskettenfahrzeug gemäß Fig. 1, jedoch mit aufgesetztem und gekoppeltem Kampfraum-Modul,
- Fig. 3: einen Teilquerschnitt gemäß Fig. 1 der Ansicht auf das Fahrzeug von hinten gesehen.

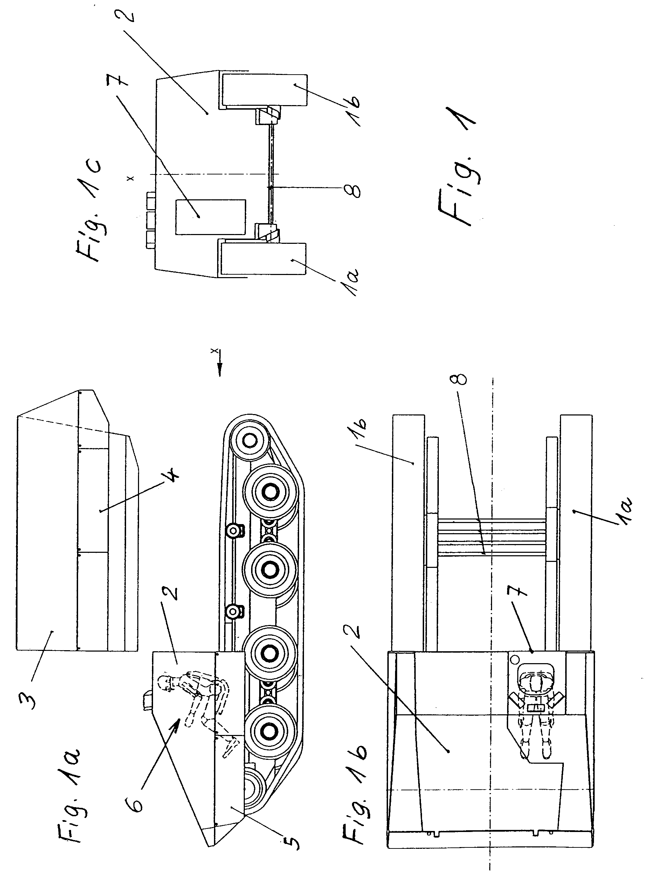

Nach Fig. 1 besteht das Gleiskettenfahrzeug im wesentlichen aus zwei Laufwerkseinheiten 1a und 1b sowie einem Triebwerks-Modul 2. Ein Kampfraum-Modul 3 mit einem Wannenteil 4 ist in abgehobener Position dargestellt. Das Triebwerks-Modul 2 beinhaltet ein Wannenteil 5 und einen Fahrerstand 6. Die Module 2 und 3 sind mit einem Durchstieg 7 für den Fahrer versehen, wie aus der Ansicht x, von hinten auf das Fahrzeug gesehen, ersichtlich ist. Die Laufwerkseinheiten 1a und 1b sind mit den jeweils zugehörigen Laufwerksteilen wie Leitrad-, Laufrollen-, und Stützrollenbaugruppen sowie Seitenvorgelege und Kette versehen. Sie sind durch Dreh- bzw. Zugstäbe 8 miteinander verbunden.

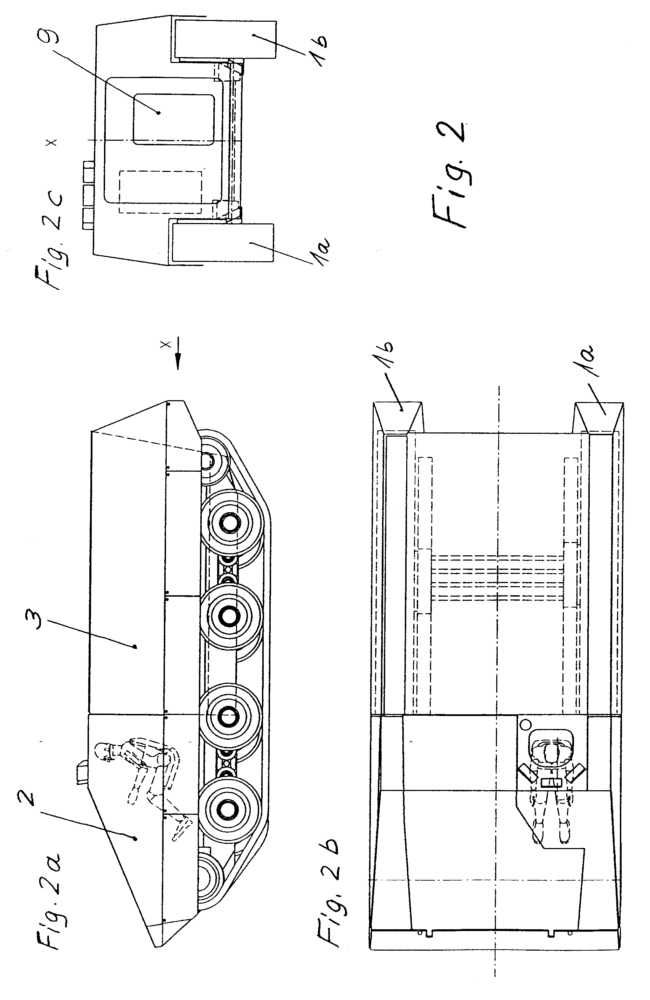

Gemäß Fig. 2 ist das Kampfraum-Modul 3 an das Fahrzeug und das Triebwerks-Modul 2 angekoppelt. Wie aus Fig. 2c bzw. Ansicht x ersichtlich, ist das Kampfraum-Modul 3 neben dem Durchstieg 7 für den Fahrer außerdem mit einem Ein- und Ausstieg 9 für die Besatzung versehen.

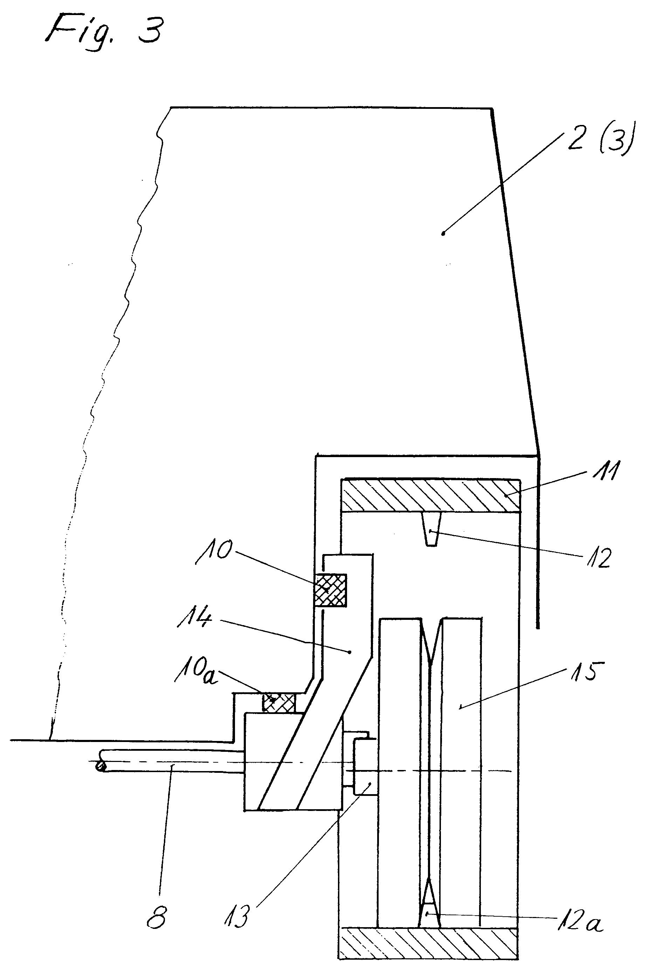

Nach dem Teilquerschnitt gemäß Fig. 3 ist ein Modul 2 (oder 3) mit dem Fahrzeug gekoppelt und über Dämpfungselemente 10 und 10a gegen die Laufwerkseinheit 1a (bzw. 1b) federnd abgestützt. Eine Kette 11 greift mittels Kettenführungszähnen 12 in ein Laufrad 15 ein, das in einem Tragarm 13 und einem Laufwerksträger 14 gelagert und über einen Dreh- bzw. Zugstab 8 mit einem nicht dargestellten Laufrad der anderen Laufwerkseinheit verbunden ist.

## Patentansprüche

1. Gleiskettenfahrzeug, bestehend aus zwei Laufwerkseinheiten und einer Wanne in modularer Zusammensetzung, **dadurch gekennzeichnet**, daß die Wanne aus mindestens zwei Modulen (2, 3) besteht, von denen mindestens ein Modul (2) mit den beiden Laufwerkseinheiten (1a, 1b) gekoppelt ist und die beiden Laufwerkseinheiten (1a, 1b) über Zugstäbe (8) miteinander verbunden sind.

2. Gleiskettenfahrzeug nach Anspruch 1, **dadurch gekennzeichnet**, daß mindestens ein Modul (2, 3) mit den beiden Laufwerkseinheiten (1a, 1b) lösbar verbunden ist.

3. Gleiskettenfahrzeug nach Anspruch 1 oder 2, **dadurch gekennzeichnet**, daß die Zugstäbe (8) als Drehstäbe ausgebildet sind.

4. Gleiskettenfahrzeug nach den Ansprüchen 1 bis 3 oder einem derselben, **dadurch gekennzeichnet**, daß ein Modul (2) den Motor, das Getriebe und den Fahrerraum umschließt.

5. Gleiskettenfahrzeug nach den Ansprüchen 1 bis 3 oder einem derselben, **dadurch gekennzeichnet**, daß ein Modul (3) den Kampfraum und den Fahrerraum umschließt.

6. Gleiskettenfahrzeug nach den Ansprüchen 1 bis 5 oder einem derselben, **dadurch gekennzeichnet**, daß die Module (2,3) verwindungssteif miteinander verbunden sind.

7. Gleiskettenfahrzeug nach den Ansprüchen 1 bis 5 oder einem derselben, **dadurch gekennzeichnet**, daß die Module (2, 3) verwindungsweich miteinander verbunden sind.

8. Gleiskettenfahrzeug nach den Ansprüchen 1 bis 7 oder einem derselben, **dadurch gekennzeichnet**, daß die Kopplung zwischen den beiden Laufwerkseinheiten (1a, 1b) und mindestens einem der Module (2, 3) über Dämpfungselemente (10) wie z.B. Gummipuffer oder Elastomere erfolgt.

9. Gleiskettenfahrzeug nach den Ansprüchen 1 bis 8 oder einem derselben, **dadurch gekennzeichnet**, daß der Fahrerraum und der Kampfraum miteinander in Verbindung stehen.
